Europäisches Patentamt

European Patent Office

Office européen des brevets

(11) Publication number: **0 180 898 B1**

## EUROPEAN PATENT SPECIFICATION

(45) Date of publication of patent specification: **30.12.92**  (51) Int. Cl.⁵: **G09G  3/20**

(21) Application number: **85113731.5**

(22) Date of filing: **29.10.85**

(54) **Flat panel display control apparatus.**

(30) Priority: **31.10.84 JP 229221/84**

(43) Date of publication of application:
**14.05.86 Bulletin  86/20**

(45) Publication of the grant of the patent:
**30.12.92 Bulletin  92/53**

(84) Designated Contracting States:
**DE FR GB**

(56) References cited:
**US-A- 4 398 190**
**US-A- 4 470 042**

**IBM TECHNICAL DISCLOSURE BULLETIN, vol.
21, no. 1, June 1978, pages 295-296, New
York, US; L.W. NICHOLSON et al.: "Attribute
controller display modification"**

(73) Proprietor: **KABUSHIKI KAISHA TOSHIBA
72, Horikawa-cho Saiwai-ku
Kawasaki-shi Kanagawa-ken 210(JP)**

(72) Inventor: **Yamaguchi, Noboru c/o Patent Di-
vision
Kabushiki Kaisha Toshiba 1-1 Shibaura
1-chome
Minato-ku Tokyo 105(JP)**

(74) Representative: **Henkel, Feiler, Hänzel & Part-
ner
Möhlstrasse 37
W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a flat panel display control apparatus and, more particularly, to an apparatus for controlling a flat panel display device which is compatible with a cathode-ray tube (to be referred to a CRT hereinafter) display device.

Conventionally, CRT display devices are most popular as display devices for personal computers. CRT display devices are superior to other display devices in terms of luminance, contrast and the like. However, since CRT display devices are heavy and large in size, they cannot be applied to handheld personal computers. Meanwhile, in addition to the CRT display device, flat panel display devices such as a liquid crystal display device (to be referred to as an LCD hereinafter), a plasma display device, an electro luminescent (EL) display device and the like are available. Although they were at first used for relatively compact devices, such as wristwatches, electronic calculators and the like, they can display the same number of dots as the CRT display device in keeping with the trend to enlarged display sizes in recent years. Thus, flat panel display devices are now used for handheld personal computers in place of CRT display devices.

However, in the computer field, it is important to provide software compatibility when new equipment is developed. When a newly developed computer does not have software compatibility with respect to a conventional computer, new software must be developed. In order to avoid such a need, newly developed computers are generally designed so that conventional computer software can be used.

In this context, the case of a newly developed personal computer with a flat panel display device having software compatibility with a conventional personal computer with a CRT display device will be considered. Although the CRT and flat panel display devices must have the same dot matrix configurations constituting one character and constituting one screen, these requirements can be easily realized by current technology. Display for emphasizing a part of a display by blink, reverse, underlining, and high-luminance display is performed by the CRT display device. Note that high-luminance display is employed to attract the attention of an operator by increasing luminance of a certain displayed character or portion among other displayed characters or portions. Since the flat panel display device can display in only a single color and has no gradation, blink, inversion and underlining can be performed as emphasized display. However, it is difficult to realize high-luminance display. Particularly, in an LCD, luminance is optimally pre-adjusted. For this reason, when the luminance is changed, it is difficult or impossible to watch a display image. This tendency becomes more notable as the LCD becomes larger in size. Therefore, even if a personal computer with a flat panel display device having software compatibility with a personal computer with a CRT display device were to be developed, such compatibility could not provide high-luminance display as an emphasized display. Since the current personal computer with a CRT display device frequently utilizes high-luminance display, if such display cannot be used in a personal computer with a flat panel display device, the corresponding portion would not be displayed, resulting in inconvenience and thereby impairing practical use.

Prior art document "IBM Technical Disclosure Bulletin", vol. 21, no. 1, June 1978, pages 295 and 296, discloses an attribute CRT controller in which screen attributes such as reverse image, blink or blink cursor are added to a display in a certain mode. To this end, row attributes are stored in a table in an area of a read/write memory, and may be modified by a control unit.

It is an object of the present invention to provide a flat panel display control apparatus which can realize a high-luminance display mode inherent in the CRT display device in a different mode in a flat panel display device and can realize compatibility between the flat panel and the CRT display devices.

To solve this object the present invention provides a flat panel display control apparatus as specified in claim 1.

This invention can be more fully understood from the following detailed description when taken in conjunction with the accompanying drawings, in which:

Fig. 1 is a block diagram showing a flat panel display control apparatus according to an embodiment of the present invention;

Fig. 2 is a detailed circuit diagram showing an attribute controller shown in Fig. 1;

Fig. 3 is an illustration showing a screen configuration of an LCD as the flat panel display device of the embodiment of the invention;

Fig. 4 is a view showing the relationship between scanning line addresses of an "A" character pattern and the character pattern data;

Figs. 5A to 5G are timing charts of various signals showing the operation of the attribute controller shown in Fig. 2;

Fig. 6 is an illustration for explaining a high-luminance display mode according to the embodiment of the invention;

Fig. 7 is a view showing a first modification of the embodiment of the invention; and

Fig. 8 is a view showing a second modification of the embodiment of the invention.

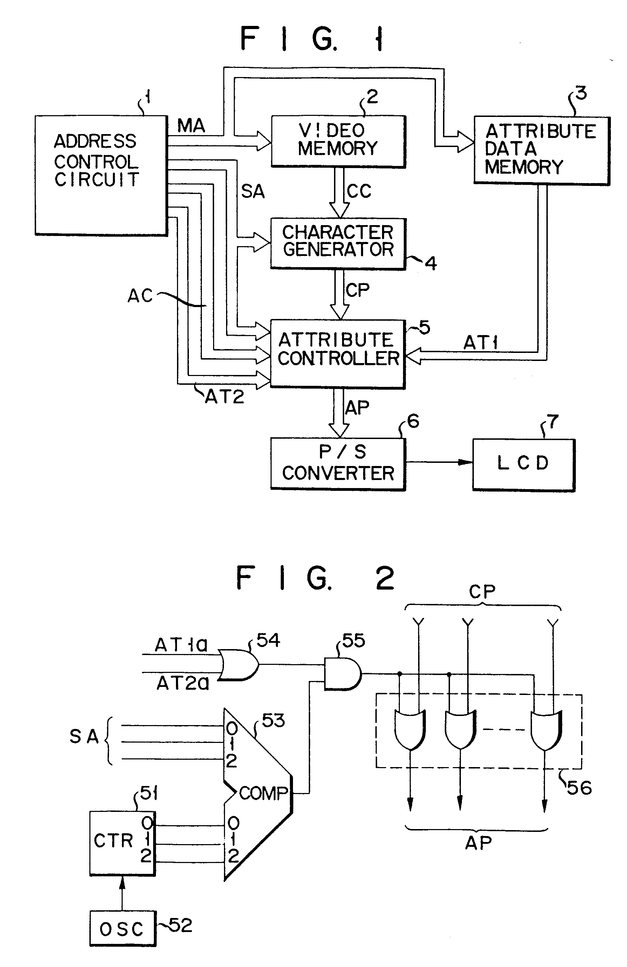

A flat panel display control apparatus according to an embodiment of the present invention will be described with reference to the accompanying drawings. Fig. 1 is a block diagram showing an arrangement of this embodiment according to the present invention. An address control circuit 1 supplies: a memory address MA to a video memory 2, an attribute data memory 3, a scanning line address SA (3 bits) to a character generator 4 and an attribute controller 5, and attribute control data AC to the controller 5. Character codes CC of characters to be displayed are written in the memory 2 in advance by a CPU (not shown). The memory 2 reads out the character code CC at an address designated by the memory address MA and supplies the readout character code CC to the generator 4. The memory 3 has the same number of addresses as those of the memory 2. Attribute data AT1 (i.e., a signal constituted by a plurality of bits each corresponding to a specific attribute) indicating various attributes is written in advance in the memory 3 by the CPU for each character stored in the memory 2. The memory 3 also reads out attribute data AT1 at an address designated by the memory address MA and supplies the readout data AT1 to the controller 5. Note that attribute data AT2 equivalent to the attribute data AT1 is supplied from the circuit 1 to the controller 5. This is to enable direct attribute control and indirect attribute control through the memory 3 both by the circuit 1. The generator 4 comprises a ROM for storing character patterns, and receives the character code CC and the scanning line address SA so as to supply a character pattern CP (6 bits) corresponding to one scanning line component of one character. The controller 5 adds to the character pattern CP from the generator 4 an attribute in accordance with the attribute control data AC and the attribute data AT1 from the attribute data memory 3 or AT2 from the circuit 1, and supplies a character pattern AP (6 bits) with the attribute data to an LCD 7 as a flat panel display device through a parallel to serial (P/S) converter (comprising a shift register) 6.

Fig. 2 is a detailed circuit diagram of a portion of the attribute controller 5 which relates to high-luminance display attribute control. A clock signal from an oscillator 52 is supplied to a 3-bit binary ring counter 51. An oscillating frequency of the oscillator 52 is set to be considerably lower than the scanning frequency of the scanning line address SA, and a change in the scanning line address SA is considerably faster than the output of the counter 51. A bit-parallel output from the counter 51 is supplied to the first input terminals of a comparator 53. The second input terminals of the comparator 53 receive the bit-parallel scanning line address SA. The comparator 53 comprises EX-OR gates, and supplies a "1" coincidence signal to the first input terminal of an AND gate 55 upon detection of a coincidence between the two input signals. High-luminance display attribute bits AT1a and AT2a of the attribute data AT1 and AT2 are supplied to the second input terminal of the AND gate 55 through an OR gate 54. The bits AT1a and AT2a are set to "1" in the case of high-luminance display. The output from the AND gate 55 is supplied to first input terminals of an OR gate array 56 comprising six OR gates equal to the number of bits of the character pattern CP. The respective bits of the character pattern CP are supplied from the generator 4 to second input terminals of the OR gate array 56. The output signal from the OR gate array 56 corresponds to the character pattern AP with the attribute data.

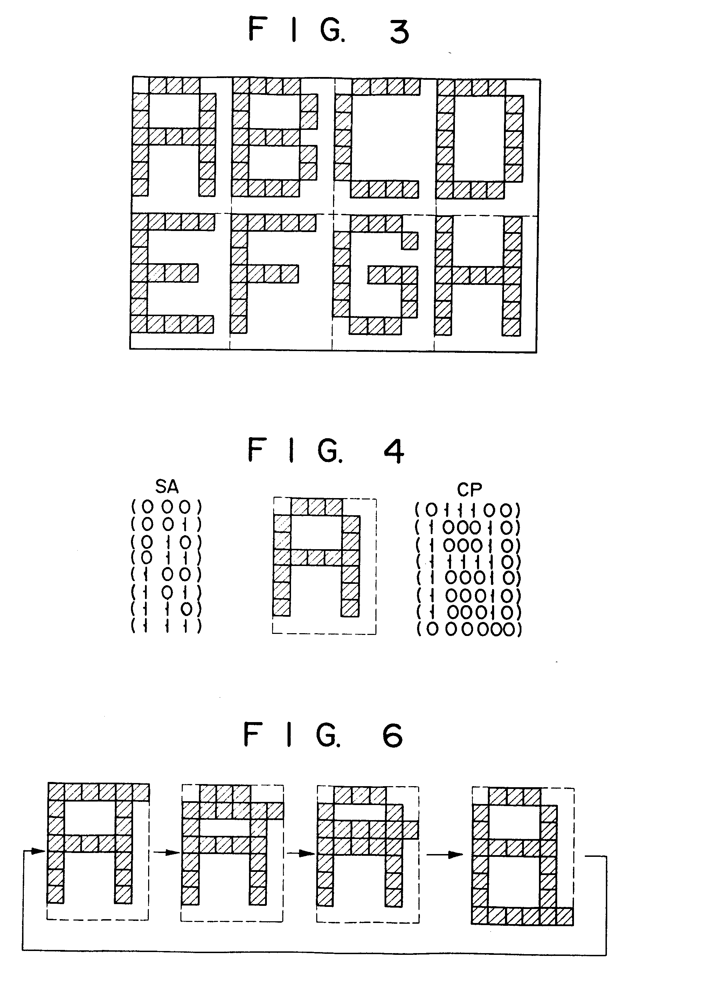

The operation of the embodiment will be described hereinafter. The LCD 7 has a screen configuration of 4 (digits) x 2 (lines), as shown in Fig. 3, and each character is displayed in an 8 x 6 dot matrix in the vertical and horizontal directions. When LCD 7 is two lines, as shown in Fig. 3, the character codes CC are written from the CPU into the memory 2 in the following manner. A character code indicating a letter "A" is written at an address "000" of the memory address MA, a character code indicating a letter "B" is written at an address "001" thereof, a character code indicating a letter "C" is written at an address "010" thereof,..., and similarly, a character code indicating a letter "H" is written at an address "111" of the address MA. In this case, the memory address MA and the scanning line address SA are generated from the circuit 1 in the following sequence to read out the character codes CC of one screen. Note that the first numeral in parentheses indicates the address MA and the second numeral indicates the address SA.

```
(000,000) → (001,000) → ... → (011,000)
→ (000,001) → (001,001) → ... → (011,001)
                    .
                    .
                    .
→ (000,111) → (001,111) → ... → (011,111)
→ (100,000) → (101,000) → ... → (111,001)
→ (100,001) → (101,001) → ... → (111,001)
                    .
                    .
                    .
→ (100,111) → (101,111) → ... → (111,111)
→ return to the beginning
```

In the above sequence, at the first timing of MA = "000" and SA = "000", since the output character code CC from the memory 2, i.e., the input character code CC to the generator 4 indicates the letter "A" and the scanning line addess SA indicates a first line (an uppermost line), the character pattern CP generated from the generator 4 corresponds to a pattern of the first line of the letter "A". When the character pattern of the letter "A" is assumed to be a pattern as shown in Fig. 4, the character pattern CP generated from the generator 4 is "011100". When the attribute data is not present (i.e., when the bits AT1a and AT2a are "0"), the AND gate 55 shown in Fig. 2 is nonconductive and generates a "0" level output, so that the character pattern CP from the generator 4 is output from the OR gate array 56 as the character pattern AP with the attribute data. When the attribute bit other than the bit data AT1a and AT2a is present, the character pattern CP from the generator 4 is controlled by the controller 5 in accordance with the bit. The output signal AP from the controller 5 is supplied to the converter 6, and is serially generated therefrom by one bit, thus being subjected to display on the LCD 7. In this manner, the character pattern of the first line of the letter "A" is displayed. When MA = "001" and SA = "000", a pattern of the first line of the letter "B" is displayed. Similarly, patterns of the first line of the letters "C" and "D", those of the second, third,..., and eighth (lowermost) lines of the letter "A", "B", "C", and "D", those of the first (uppermost), second,..., and eighth (lowermost) lines of "E", "F", "G" and "H" are displayed. Then, the display returns to the first line of the letters "A", "B", "C" and "D", and these operations are repeated.

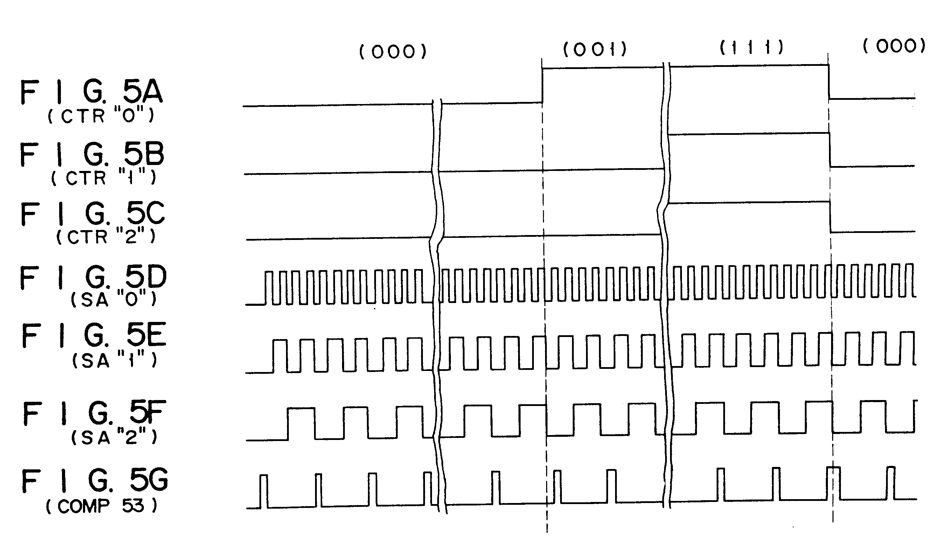

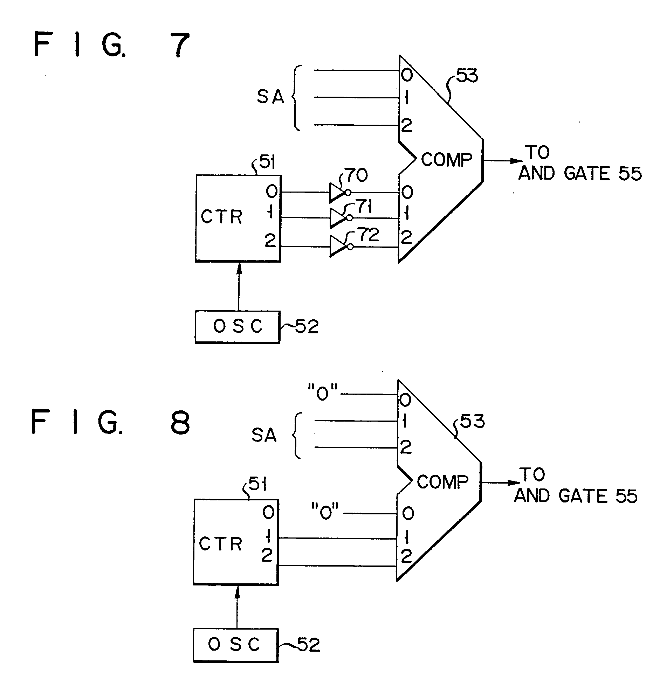

The operation for adding the high-luminance display attribute to the letter "A" will be described below. In this case, attribute control is indirectly performed through the memory 3, and the attribute data is supplied only from the memory 3. The CPU writes in advance the attribute data indicating high-luminance display (the attribute bit AT1a = "1") at the memory address MA = "000" of the memory 3, and attribute data indicating non-high-luminance display (AT1a = "0") at the address MA = "001" to "111". As described above, since the oscillating frequency of the oscillator 52 is set to be considerably lower than the scanning frequency of the scanning line address SA, a change in output from the counter 51 becomes slower than that in the address SA. Figs. 5A to 5C respectively show the output data bits 0, 1 and 2 of the counter 51, and Figs. 5D to 5F respectively show data bits 0, 1 and 2 of the scanning line address SA. Thus, the "1" coincidence signal is generated from the comparator 53 once a period of the scanning line address SA, as shown in Fig. 5G. When the memory address MA = "000", since the bit AT1a indicating high-luminance display is "1" level, the AND gate 55 is conductive, and the "1" coincidence signal from the comparator 53 is supplied to the first input terminals of the OR gate array 56 through the AND gate 55. When the address MA = "000", all the outputs AP from the array 56 are "1" level irrespective of the character pattern CP at any address SA, and then a lateral stripe is displayed on the LCD 7. When the output from the counter is "000", the coincidence signal is generated every time the address SA is "000". However, when the output from the counter 51 is "001", the coincidence signal is generated every time the scanning line address SA is "001". As the output from the counter 51 is changed, when the address SA is changed as "010", "011",..., "111", "001",..., the lateral stripe is displayed. For this reason, the lateral stripe moves downward and returns to the uppermost line after reaching the lowermost line, i.e., the stripe is vertically circulated, as shown in Fig. 6.

In this manner, according to the embodiment, emphasized display instead of high-luminance display can be performed such that the lateral stripe is superimposed on the displayed character "A" while vertically moving on the character. Thus, a control apparatus for a flat panel display device having full compatibility with a CRT display device can be realized simply by adding a small amount of hardware.

In the embodiment, the lateral stripe of one line repeatedly moves downward, but the present invention is not limited to this. As shown in Fig. 7, when the respective output bits of the counter 51 are supplied to the comparator 53 through inverters 70, 71 and 72, the moving direction of the lateral stripe is reversed. As shown in Fig. 8, when only the output bits 1 and 2 of the counter 51 are supplied to the first input terminals of the comparator 53, the bits 1 and 2 of the scanning line address SA are supplied to the second input terminals of the comparator 53, and the bits 0 of the first and second input terminals of the comparator 53 are fixed to be "0", lateral stripes comprising two lines move downward. Furthermore, when the modifications shown in Figs. 7 and 8 are combined, the lateral stripes comprising two lines move upward. In addition, the attribute data is written in the memory 3 in advance, but can be directly supplied from the circuit 1 to the controller 5.

The present invention is not limited to the above embodiment. As an emphasized display mode as an alternative to high-luminance display, a lateral dotted stripe can be vertically moved, or a character font of the corresponding portion (e.g., using double dots) can be changed. Furthermore, these display modes can be combined. To summarize, when attribute data indicating high-luminance display attribute is supplied, instead of invalidating it, by performing another emphasized display a control apparatus for a flat panel display device having full compatibility with a CRT display device can be realized. The flat panel display device is not limited to an LCD, but can be a plasma display device, an EL display device or the like.

**Claims**

1.  A flat panel display control apparatus comprising:

    a flat panel display device (7) for displaying - only in a single colour and without any gradation - each character by a plurality of dots in a matrix form;

    pattern storing means (2, 4) for storing a character pattern of a character to be displayed;

    means (1, 3) for storing attribute data of each character stored in said pattern storing means (2); and

    attribute control means (5) for reading out the character pattern and the attribute data thereof;

    said attribute control means (5) further comprising:

    converting means (51-55) for changing the attribute data indicating high-luminance display into another attribute data indicating an emphasized display which can be performed by the flat panel display device (7); and

    processing means (56) for processing the character pattern in accordance with the changed attribute data so as to supply the processed character pattern to said flat panel display device (7).

2.  A flat panel display control apparatus according to claim 1, characterized in that said converting means (51-55) generate a lateral stripe pattern which repeatedly moves in a vertical direction in a dot matrix constituting one character, and said processing means (56) superimpose the repeatedly moving lateral stripe pattern on the character pattern when the attribute data indicates high-luminance display.

3.  A flat panel display control apparatus according to claim 2, characterized in that said converting means (51-55) generate a lateral stripe pattern which repeatedly moves downward.

4.  A flat panel display control apparatus according to claim 2, characterized in that said converting means (51-55) generate a lateral stripe pattern which repeatedly moves upward.

5.  A flat panel display control apparatus according to claim 1, characterized in that

    said flat panel display device (7) sequentially turns on dots of a dot matrix while two-dimensionally scanning the dots,

    said converting means (51-55) comprises an oscillator (52) for generating a pulse signal having a frequency lower than that of vertical scanning of said flat panel display device (7), a counter (51) for receiving the output pulse signal from said oscillator (52), a comparator (53) for comparing an output from said counter (51) and a scanning line address indicating a display line (horizontal line) of said flat panel display device (7) and for generating a coincidence signal when coincidence therebetween is detected, and an AND gate (55) for receiving the coincidence signal generated from said comparator (53) and a high-luminance attribute signal, and

    said processing means comprises an OR gate (56) for receiving a pattern for one line of a character pattern designated by the scanning line address and the output from the AND gate (55).

6.  A flat panel display control apparatus according to claim 5, characterized in that said comparator (53)

EP 0 180 898 B1

compares the output from said counter (51) and the scanning line address for each identical bit.

7. A flat panel display control apparatus according to claim 5, characterized in that said comparator (53) compares an inverted output from said counter (51) and the scanning line address for each identical bit.

8. A flat panel display control apparatus according to claim 5, characterized in that said comparator (53) compares the output from said counter (51) excluding a least significant bit and the scanning line address excluding a least significant bit for each identical bit.

**Patentansprüche**

1. Flachbildschirm-Steuergerät, das folgendes umfaßt:
eine Flachbildschirmvorrichtung (7) zur Wiedergabe in nur einer Farbe und ohne Abstufung jedes Schriftzeichens durch eine Vielzahl von Punkten in Form einer Matrix;
eine Musterspeichereinrichtung (2, 4) zur Abspeicherung des Musters eines wiederzugebenden Schriftzeichens;
eine Einrichtung (1, 3) zur Abspeicherung von Attributdaten zu jedem in dieser Musterspeichereinrichtung (2) abgespeicherten Schriftzeichen; und
eine Attributsteuereinrichtung (5) zum Auslesen des Schriftzeichenmusters und der zugehörigen Attributdaten,
wobei diese Attributsteuereinrichtung (5) im einzelnen folgendes enthält:
eine Konvertiereinrichtung (51-55) zur Änderung der Attributdaten für die Wiedergabe mit hoher Leuchtdichte zu anderen Attributdaten für die hervorgehobene Wiedergabe, die durch die Flachbildschirmvorrichtung (7) vorgenommen werden kann; und
eine Verarbeitungseinrichtung (56) zur Verarbeitung des Schriftzeichenmusters gemäß den geänderten Attributdaten, um das verarbeitete Schriftzeichenmuster an die Flachbildschirmvorrichtung (7) zu übergeben.

2. Flachbildschirm-Steuergerät gemäß Anspruch 1, dadurch gekennzeichnet, daß die Konvertiereinrichtung (51-55) ein laterales Streifenmuster erzeugt, das sich wiederholt in einer senkrechten Richtung in einer ein Schriftzeichen bildenden Punktmatrix bewegt, und daß die Verarbeitungseinrichtung (56) das sich wiederholt bewegende laterale Streifenmuster auf das Schriftzeichenmuster überlagert, wenn die Attributdaten die Wiedergabe in hoher Leuchtdichte vorgeben.

3. Flachbildschirm-Steuergerät gemäß Anspruch 2, dadurch gekennzeichnet, daß die Konvertiereinrichtung (51-55) ein laterales Streifenmuster erzeugt, das sich wiederholt abwärts bewegt.

4. Flachbildschirm-Steuergerät gemäß Anspruch 2, dadurch gekennzeichnet, daß die Konvertiereinrichtung (51-55) ein laterales Streifenmuster erzeugt, das sich wiederholt aufwärts bewegt.

5. Flachbildschirm-Steuergerät gemäß Anspruch 1, dadurch gekennzeichnet, daß die Flachbildschirmvorrichtung (7) sequentiell Punkte einer Punktmatrix während des zweidimensionalen Abtastens der Punkte einschaltet, daß die Konvertiereinrichtung (51-55) einen Oszillator (52) zur Erzeugung eines Impulssignals mit einer niedrigeren Frequenz als diejenige des vertikalen Abtastens der Flachbildschirmvorrichtung (7), einen Zähler (51) zur Registrierung des Ausgangs-Impulssignals vom Oszillator (52), einen Komparator (53) für den Vergleich eines Ausgangs dieses Zählers (51) und einer Abtastzeilenadresse entsprechend einer Bildschirmzeile (horizontale Zeile) dieser Flachbildschirmvorrichtung (7) und für die Generierung eines Koinzidenzsignals im Falle einer erkannten Koinzidenz zwischen diesen, ein UND-Gatter (55) zur Annahme des von diesem Komparator (53) generierten Koinzidenzsignals und eines Attributsignals für hohe Leuchtdichte umfaßt,
wobei diese Verarbeitungseinrichtung ein ODER-Gatter (56) zum Empfang eines Musters für eine Zeile eines Schriftzeichenmusters enthält, die durch die Abtastzeilenadresse und den Ausgang vom UND-Gatter (55) definiert ist.

6. Flachbildschirm-Steuergerät gemäß Anspruch 5, dadurch gekennzeichnet, daß der Komparator (53) den Ausgang des Zählers (51) mit der Abtastzeilenadresse für jedes identische Bit vergleicht.

7. Flachbildschirm-Steuergerät gemäß Anspruch 5, dadurch gekennzeichnet, daß der Komparator (53)

6

einen invertierten Ausgang des Zählers (51) mit der Abtastzeilenadresse für jedes identische Bit vergleicht.

8. Flachbildschirm-Steuergerät gemäß Anspruch 5, dadurch gekennzeichnet, daß der Komparator (53) den Ausgang des Zählers (51) ausschließlich eines niedrigstwertigen Bit mit der Abtastzeilenadresse ausschließlich eines niedrigstwertigen Bit für jedes identische Bit vergleicht.

**Revendications**

1. Appareil de commande de dispositif d'affichage à panneau plat comprenant:
   un dispositif d'affichage à panneau plat (7) pour un affichage en une seule couleur et sans gradation de chaque caractère par une pluralité de points sous forme matricielle;
   des moyens de mémorisation de modèles (2,4) pour mémoriser un modèle de caractère d'un caractère à afficher;
   des moyens (1,3) pour mémoriser des données d'attribut de chaque caractère mémorisé dans lesdits moyens de mémorisation de modèles (2); et
   un moyen de contrôle d'attributs (5) pour lire le modèle de caractère et ses données d'attribut;
   ledit moyen de contrôle d'attributs (5) comprenant en outre:
   des moyens convertisseurs (51-55) pour changer les données d'attribut indiquant un affichage avec une haute luminance en autres données d'attribut indiquant un affichage accentué qui peut être exécuté par le dispositif d'affichage à panneau plat (7); et
   un moyen de traitement (56) pour traiter le modèle de caractère selon les données d'attribut changées de manière à fournir le modèle de caractère traité audit dispositif d'affichage à panneau plat (7).

2. Appareil de commande de dispositif d'affichage à panneau plat selon la revendication 1, caractérisé en ce que lesdits moyens convertisseurs (51-55) génèrent un modèle de bande latérale qui se déplace d'une façon répétitive dans une direction verticale dans une matrice de points constituant un caractère, et ledit moyen de traitement (56) superpose le modèle de bande latérale se déplaçant d'une façon répétitive au modèle de caractère quand les données d'attribut indiquent un affichage avec une haute luminance .

3. Appareil de commande de dispositif d'affichage à panneau plat selon la revendication 2, caractérisé en ce que lesdits moyens convertisseurs (51-55) génèrent un modèle de bande latérale qui se déplace vers le bas d'une façon répétitive.

4. Appareil de commande de dispositif d'affichage à panneau plat selon la revendication 2, caractérisé en ce que lesdits moyens convertisseurs (51-55) génèrent un modèle de bande latérale qui se déplace vers le haut d'une façon répétitive.

5. Appareil de commande de dispositif d'affichage à panneau plat selon la revendication 1, caractérisé en ce que
   ledit dispositif d'affichage à panneau plat (7) met séquentiellement en circuit les points d'une matrice de points tout en balayant les points bidimentionnellement,
   lesdits moyens convertisseurs (51-55) comprennent un oscillateur (52) pour générer un signal pulsé ayant une fréquence inférieure à celle du balayage vertical dudit dispositif d'affichage à panneau plat (7), un compteur (51) pour recevoir le signal pulsé de sortie dudit oscillateur (52), un comparateur (53) pour comparer le signal de sortie dudit compteur (51) et une adresse de ligne de balayage indiquant une ligne d'affichage (ligne horizontale) dudit dispositif d'affichage à panneau plat (7) et pour générer un signal de coïncidence quand une coïncidence est détectée entre ceux-ci, et une porte ET (55) pour recevoir le signal de coïncidence généré par ledit comparateur (53) et un signal d'attribut de haute luminosité, et
   ledit moyen de traitement comprend une porte OU (56) pour recevoir un modèle pour une ligne d'un modèle de caractère indiqué par l'adresse de ligne de balayage et le signal de sortie de la porte ET (55).

6. Appareil de commande de dispositif d'affichage à panneau plat selon la revendication 5, caractérisé en ce que ledit comparateur (53) compare le signal de sortie dudit compteur (51) et l'adresse de ligne de balayage pour chaque bit identique.

7. Appareil de commande de dispositif d'affichage à panneau plat selon la revendication 5, caractérisé en ce que ledit comparateur (53) compare un signal de sortie inversé dudit compteur (51)et l'adresse de ligne de balayage pour chaque bit identique.

8. Appareil de commande de dispositif d'affichage à panneau plat selon la revendication 5, caractérisé en ce que ledit comparateur (53) compare le signal de sortie dudit compteur (51) à l'exclusion du bit de poids le plus faible et l'adresse de ligne de balayage à l'exclusion du bit de poids le plus faible pour chaque bit identique.

# F I G. 1

# F I G. 2

F I G. 3

F I G. 4

SA

(0 0 0)
(0 0 1)
(0 1 0)
(0 1 1)
(1 0 0)
(1 0 1)
(1 1 0)
(1 1 1)

CP

(0 1 1 1 0 0)
(1 0 0 0 1 0)
(1 0 0 0 1 0)
(1 1 1 1 1 0)
(1 0 0 0 1 0)
(1 0 0 0 1 0)
(1 0 0 0 1 0)
(0 0 0 0 0 0)

F I G. 6

10

FIG. 5A
(CTR "0")

FIG. 5B
(CTR "1")

FIG. 5C
(CTR "2")

FIG. 5D
(SA "0")

FIG. 5E
(SA "1")

FIG. 5F
(SA "2")

FIG. 5G
(COMP 53)

(000)　　　　(001)　　　(111)　　(000)

EP 0 180 898 B1

# F I G. 7

# F I G. 8